# EUROPEAN PATENT SPECIFICATION

(11) **EP 3 100 869 B1**
(45) Date of publication and mention of the grant of the patent: **18.09.2019**
(21) Application number: 16171481.1
(22) Date of filing: 26.05.2016
(51) Int. Cl.: B43K 7/02, B43K 29/00, G06F 3/0354

(54) **ACTIVE PEN WITH AN INK CARTRIDGE**
AKTIVER STIFT MIT EINER TINTENPATRONE
STYLO ACTIF AVEC UNE CARTOUCHE D'ENCRE

(30) Priority: 04.06.2015 CH 8012015
(43) Date of publication of application: 07.12.2016
(73) Proprietor: Advanced Silicon SA, 1007 Lausanne (CH)
(72) Inventor: BALLAN, Hussein, 1806 St-Légier (CH)
(74) Representative: P&TS SA (AG, Ltd.)

(56) References cited:
- WO-A1-02/34531
- WO-A1-02/34549
- WO-A1-2009/091596
- US-A1- 2003 138 282
- US-A1- 2009 154 982

## Description

### Field of the invention

The present invention concerns an active pen with an ink cartridge.

### Description of related art

Touch devices are used in various application fields in which object presence detections are involved, such as, but not limited to, touch pads, touch panels, touch screens or projective capacitive displays. Touch devices detect passive objects touching the touch device and can determine the position of the touch. This allows for example a user control. Pens are often used as passive objects. In order to improve the position detection, active pens apply an electric signal on the tip of the pen for capacitive, inductive or electromagnetic coupling with the touch device.

For writing or drawing on paper or any other base material, another type of pen is necessary which transfers ink on the base material. Therefore, nowadays two types of pen are necessary to interact, i.e. write or draw, on a touch sensor and to interact on paper.

Pens for transferring ink on paper work normally mechanically by sucking ink from the ink reservoir during writing. The ink could be transferred by various transfer means like a roller ball, a porous material or by capillary means. However, there are also pens with electronic control for transferring the ink. Such electronic control is found in particular in multicolour pens mixing electronically three different ink colours. In WO2009/091596 ink from three ink reservoirs are electronically pumped into a mixing chamber from which the mixed ink is transferred by a roller ball on the base material. In US2009/0154982 and US2003/0138282, the ink of the three ink colour reservoirs is directly mixed on the roller ball by ink jets.

WO2002/034549, WO2002/034531, EP1370425 or US6454482 discloses a pen for use on touch devices and on paper. The pen comprises a tip configured to be used on a touch screen, i.e. not transferring any ink from the ink reservoir to the tip. A printhead is arranged next to the tip in order to electronically transfer ink from the ink reservoir on paper, if the pen is not used on a touch screen. However, the writing experience of such a pen is more like a spray can than a classic pen.

US2003118391 discloses a writing pen with a ball tip for transferring the ink from an ink reservoir to a paper. The ball can be prevented by a piezo-element or by an electromagnet from rolling, when a vicinity of the writing pen to a touch sensor is detected. This prevents the transfer of the ink from the ink reservoir to the touch screen. However, strong pressure or impacts on the ball could damage the electromagnet or the piezo-element and damage the ink-interruption mechanism.

### Brief summary of the invention

Therefore, it is an object to provide an active pen suitable for switching between an ink mode and an electronic mode which allows a classic writing experience in the ink mode and a robust way to control/stop the ink transfer from the ink reservoir on the paper for the electronic mode in which an electric signal is transmitted to a position sensor.

According to the invention, these aims are achieved by means of an active pen according to claim 1.

The use of an electronic device for creating an ink jet from the ink reservoir onto the surface of the ball of the cartridge-tip allows arranging the electronic device for controlling the ink transfer in secure distance from the ball. Therefore, impacts and pressure shocks on the ball are not transferred to the electronic device. At the same time, the same tip could be used in the electronic mode for emitting an electric signal, because the ink transfer to the tip is immediately stopped and the tip is connected to a control circuit of the active pen. Also the ink blocking mechanism does not interact with the electric signal applied to the tip.

The dependent claims refer to further advantageous embodiments of the invention.

The use of a semi-conductor device and/or a microelectromechanical systems (MEMS) device is an advantageous realization of an ink jet within an ink cartridge for a pen.

### Brief Description of the Drawings

The invention will be better understood with the aid of the description of an embodiment given by way of example and illustrated by the figures, in which:
Fig. 1 shows a first cross-section of an embodiment of an ink cartridge;
Fig. 2 shows a second cross-section of the embodiment of the ink cartridge of Fig. 1; and
Fig. 3 shows an embodiment of an active pen including an ink cartridge.

### Detailed Description of possible embodiments of the Invention

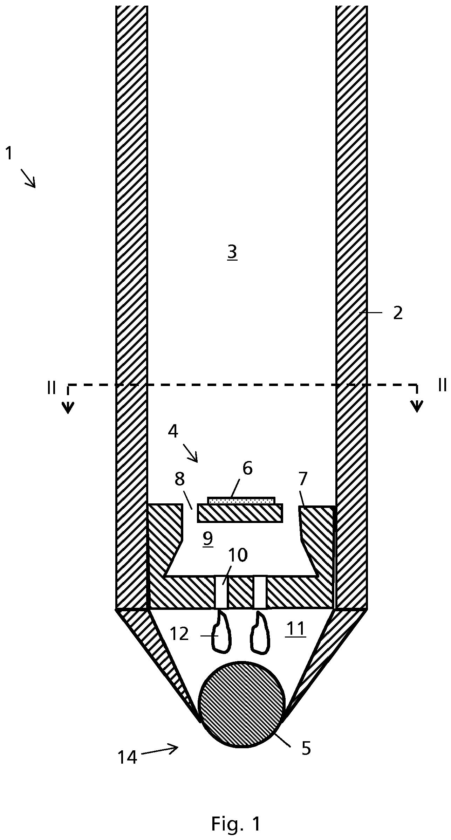

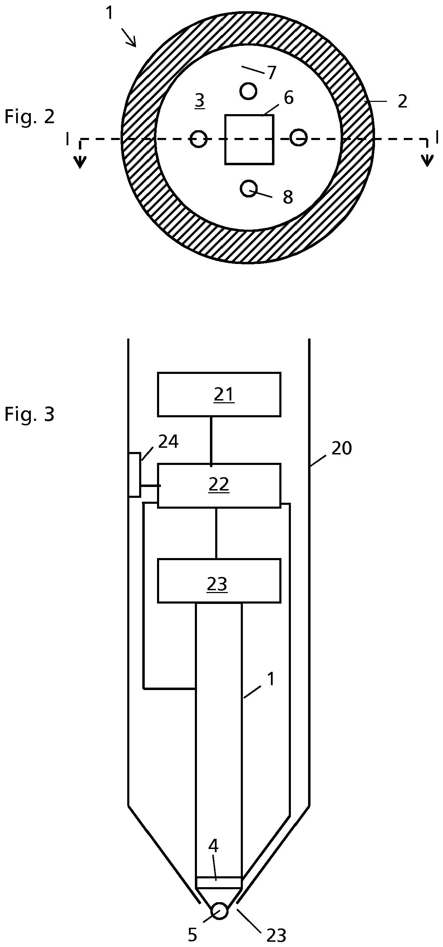

Fig. 1 and 2 shows an embodiment of an ink cartridge 1. Fig. 1 shows a cross-sectional view along a longitudinal axis of one distal end of the ink cartridge 1. The cross-sectional view of Fig. 1 is indicated in Fig. 2 by the line I-I. Fig. 2 shows a cross-sectional view of the ink cartridge 1 along an axis being perpendicular to the longitudinal axis of the ink cartridge 1. The cross-sectional view of Fig. 2 is indicated in Fig. 1 by the line II-II.

The ink cartridge 1 comprises an ink reservoir 3, a tip 14 and an electronic device 4.

The tip 14 comprises a ball 5 which is supported rotatably around the centre of the ball 5. The ball 5 is arranged such that in each rotation position a first portion of the surface of the ball 5 is inside the ink cartridge and a second portion of the surface of the ball 5 is exposed to the exterior of the ink cartridge, more precisely on the tip 14 of the ink cartridge 1. If ink is transferred from the ink reservoir 13 onto the surface of the ball 5 in the first portion, the ink can be transferred to the exterior of the ink cartridge 1 by rotating the surface of the ball 5 with the ink to the second portion. This allows transferring ink from the interior of the ink cartridge 1 to the exterior of the ink cartridge 1, i.e. to the tip 14, simply by rotating the ball 5. Such tips 14 are well-known in the state of the art from roller ball pens or ballpoint pens. Preferably, the ink cartridge 1 has a longitudinal axis with two distal ends. Preferably, the tip 14 is arranged at a first distal end of the ink cartridge 1. The tip 14 and/or the ball 5 are configured to be electrically conductive such that a signal can be applied to capacitively, inductively or electromagnetically couple with a position sensor (e.g. a touch device) to detect the position of the tip 14 on the position sensor.

The ink reservoir 3 is configured to contain ink. Ink is any material which is configured to colour by contact a material which shall be coloured. The contact is normally established by the tip 14. Colour in the sense of this invention includes any type of colour. This includes any colour of the classic colour spectrum, e.g. red, orange, yellow, green cyan, blue, violet. This includes any colour in the wider sense like black, grey and white. This includes any colour outside the visible spectrum of light, e.g. in the infrared or in the ultraviolet range, e.g. for a UV-pen. This can also include any mixture of the mentioned colours. The ink is configured to be deposited on the surface of the ball 5. The ink is further configured to be transferred from on the surface of the ball 5 from the first portion to the second portion. The ink is configured to be jetted out of the reservoir as will be explained in more detail below. Preferably, the ink is liquid (including also viscous), but it is also possible to realise the ink in the ink reservoir 3 as particles. Preferably, the ink cartridge 1 comprises a tubular body 2 forming at least partly the walls of the ink reservoir 3. Along the longitudinal axis of the tubular body 2 and/or the ink cartridge 1, the ink reservoir 3 has a first end pointing in the direction of the first distal end of the ink cartridge 1 or the tip 14 and a second end pointing in the direction of the second distal end of the ink cartridge. The second end of the ink reservoir 3 is preferably realized by a wall. The first end of the ink reservoir 3 is in the shown embodiment realized by the electronic device 4. It is however also possible that ink reservoir 3 can be coupled with the electronic device 4 in another way. Preferably, the ink cartridge 1 is prefilled with the ink. The ink cartridge 1 can be a disposable. In another embodiment, the ink could be refilled in the ink reservoir 1, e.g. from the second end of the ink reservoir 3.

The electronic device 4 is configured to transfer the ink from the ink reservoir 3 onto the surface of the ball 5 of the tip 14. According to the invention, the electronic device 4 is configured to create an ink jet 12 which jets the ink from the ink reservoir 3 on the surface of the ball 5. An ink jet according to the invention is a stream (also for a short time) of ink forced out of an aperture or nozzle. The ink jet has a jetting direction of the stream after the aperture or nozzle and optionally a limited opening angle. The ink outlet distinguishes itself from other ink jets in that the ink is distributed in all directions after the outlet. Therefore, the electronic device 4 is arranged between the ink reservoir 3 and the ball 5. The walls of the body 2, the electronic device 4 and the first portion of the ball 5 form a chamber 11. The surface of the ball 5 (in the first portion) is preferably arranged with a certain distance to the electronic device 4 in order to secure the electronic device 4 from damages from a strong force on the ball 5. The distance between the surface of the ball 5 and the electronic device 4 is preferably at least 0.5 millimetres, preferably at least 0.7 millimetres, preferably at least 1 millimetre, preferably at least 1.5 millimetres, preferably at least 2 millimetres. By the creation of an ink jet 12 in the chamber 11 from the electronic device 4 onto the first portion of the surface of the ball 5, the ink can be transferred on the ball 5 in a safe and controllable way. The present technology allows not only to easily switch on and off the ink transfer from the ink reservoir 3 on the ball 5, but it allows further to control the type of ink pattern created by the tip 14 of the pen. For example the ink quantity and/or the jet opening angle and/or the number of jets could be varied electronically. This could be used to control the intensity of the ink drawn by the tip 14. In the case of at least two ink reservoirs with different colours, and different jets for each colour, one single pen could create a continuous colour spectrum by the mixture of the at least two inks of the at least two ink reservoirs on the surface of the ball 5. However, in a preferred embodiment, the cartridge has only one ink reservoir 3 and is configured to provide only one ink colour.

The electronic device 4 is realized preferably by a semi-conductor device, e.g. a silicon chip. The electronic device 4 is preferably realized by a microelectromechanical systems (MEMS) device. Fig. 1 shows an embodiment for such an electronic device 4. The ink jet 12 is here created by a silicon chip 7 with a piezo-electric element 6. The silicon chip comprises a chamber 9 connected with the ink reservoir 3 by at least one conduit 8 (here four conduits 8). The chamber 9 is connected with the chamber 11, i.e. with the surface of the ball 5 in the first portion, by at least one nozzle 10. The present embodiment comprises two nozzles 10, but any other number of nozzles 10 is possible. The ink jet 10 can be created by activating the piezo-electric element 6 for reducing the volume of the chamber 9 and forcing the ink through the nozzles 10 on the surface of the ball 5. If the piezo-electric element is not activated, the ink jet 12 is not created and the ink transfer on the ball 5 is interrupted. However, alternative embodiments for creating an ink jet are possible. E.g. a heating element could be used to created bubbles in the ink which create an ink jet on the ball 5. Technologies for creating ink jets are well known from ink jet printers. These technologies can be used for the electronic device 4.

The electronic device 4 is preferably controlled by a signal received from a pen in which the ink cartridge 1 is installed. However, it is also possible that the electronic device 4 is partly or fully controlled by a sensor in the ink cartridge 1 and/or in the pen. A sensor could be applied to detect a second operation mode in which the ink transfer on the ball 5 must be stopped. This could be done for example by detecting an electric signal applied on the tip 14 or by detecting the vicinity of a touch sensor. It is also possible to detect in the first mode of operation, in which ink shall be emitted by the tip 14, when the ink jet must be (re)created or interrupted in order to avoid that too much ink is transferred on the surface of the ball 5 without being deposited on a paper. Such a sensor could detect the rotation of the ball 5, the amount of ink 5 on the surface of the ball 5, the movement of the ink cartridge 1, e.g. by an accelerometer, etc..

The ink cartridge 1 is mounted in a pen. The ink cartridge 1 can be mounted such that the ink cartridge 1 can be replaced, once the ink cartridge 1 is empty. It is however also possible to arrange the elements of the ink cartridge 1 in a non-replaceable way in the pen. In this case, the ink reservoir 3 could be rechargeable or the pen itself is a disposable pen.

The pen is an active pen for applying an electric signal on the tip 14 and/or ball 5 of the ink cartridge 1. Preferably, the electric signal is applied also on the ball 5 so that the electric signal is emitted from the contact point with the position sensor. However, it is also possible to apply the electric signal only (or in addition) to the rest of the tip, e.g. because the contact to the rotating ball might increase the complexity. In this case, the distal part of the tip supporting the ball 5 should apply the electric signal, because this part is the closest to the touch screen after the ball 5 itself. Fig. 3 shows a schematic view of an embodiment of an active pen 20 with the above-described ink cartridge 1. The active pen 20 comprises the ink cartridge 1, a power supply 21, a controller 22, a pressure sensor 23 and a user input 24.

The power supply 21 is preferably a battery. However, any other power supply like a power harvesting mechanism could be used. The power supply provides the controller 22 with power.

The controller 22 is configured to operate the active pen 20 in a first operation mode in which ink is transferred by the ink jet 12 from the ink reservoir 3 onto the ball 5. The controller 22 is further configured to operate the active pen 20 in a second operation mode in which ink transfer from the ink reservoir 3 onto the ball 5 is stopped. Therefore, the controller 22 is electrically connected to the electronic device 4. The controller 22 is further electrically connected to the tip 14 and/or the ball 5 of the ink cartridge 1 in order to apply in the second operation mode an electric signal at the tip 14 and/or the ball 5. The electric signal is configured to create a capacitive, inductive or electromagnetic coupling with a position sensor. The electric signal is preferably a periodic signal, like an AC voltage at a certain frequency. In the shown embodiment, the controller 22 has two separate contacts for contacting the tip 14 and/or the ball 5 and for contacting the electronic device 4. However, it is also possible that the electronic device 4 and the tip 14 and/or the ball 5 are connected with the controller 22 by the same electric line.

The user input 24 is configured to switch between the first and the second operation mode. However, it is also possible that the switch between the first and the second operation mode is not performed by the user, but by a sensor. The user input 24 could further include on off switch for switching the power supply of the pen 20 off. The user input 24 could also include possibilities for the user to control parameters of the ink jet 12. The user input 24 could be a button or a switch or a more complex user interface, e.g. with a plurality of buttons or switches.

Optionally, the active pen 20 could comprise a pressure sensor 23 for measuring the pressure acting on the tip 14 and/or on the ball 5, when the active pen is operated in the second operation mode. The measured pen pressure can be transferred together with the electric signal over the tip 14 to the position detector. The pressure sensor 23 normally necessitates that the ink cartridge 1 moves along the longitudinal axis of the pen 20. In one embodiment, the movement along the longitudinal axis of the pen 20 is blocked in the first operation mode.

## Claims

1. Active pen comprising an ink cartridge and a control circuit,
wherein the ink cartridge comprises:
an ink reservoir (3) for containing ink,
a tip with a ball (5) rotatably supported for transferring ink from the ink reservoir to the tip during rotation of the ball;
an electronic device (4) for creating an ink jet (12), said ink jet is configured to transfer the ink from the ink reservoir (3) onto the surface of the ball (5);
wherein the control circuit (22) is electrically connected with the electronic device (4) and configured to switch the active pen between a first operation mode in which the electronic device (4) is controlled to transfer ink from the ink reservoir (5) to the surface of the ball (5) by the ink jet (12) and a second operation mode in which the electronic device (4) is controlled to switch off the ink jet (12) to interrupt the ink transfer from the ink reservoir (5) to the surface of the ball (5);
wherein the control circuit (22) is electrically connected with the tip and/or the ball (5) of the ink cartridge (1) and is configured to apply in the second mode an electric signal to the tip and/or the ball (5) for a capacitive or inductive or electromagnetic coupling with a touch device to detect the position of the tip and/or the ball (5) on the touch device.

2. Active pen according to the previous claim, wherein the electronic device (4) is a semi-conductor device.

3. Active pen according to one of the previous claims, wherein the electronic device (4) is a microelectromechanical systems device.

4. Active pen according to one of the previous claims, wherein the electronic device (4) comprises a piezoelectric element or a heating element for creating the ink jet (12).

5. Active pen according to the previous claim, wherein the electronic device (4) comprises an ink chamber (9) connected to the ink reservoir (3) and a nozzle (10) connecting the ink chamber (9) with the ball (5), wherein the piezoelectric element (6) reduces the volume of the ink chamber (9) to press ink through the nozzle (10) in order to create the ink jet (12).

6. Active pen according to one of the previous claims, wherein the electronic device (4) is arranged with a distance of at least 0.5 millimetres from the surface of the ball (5).

7. Active pen according to one of the previous claims, wherein the ink cartridge comprises a second ink reservoir for containing a second ink, wherein the electronic device (4) or a second electronic device is configured to create a second ink jet for transferring the second ink from the second ink reservoir to the surface of the ball (5).

8. Active pen according to one of claims 1 to 6 configured to jet ink in only one colour on the ball (5).

9. Active pen according to one of the previous claims comprising a pressure sensor (23) configured to measure in the second operation mode the pressure applied on the ink cartridge (1).

10. Active pen according to the previous claim, wherein the ink cartridge (1) is mounted such in the pen (20) to be movable along a longitudinal axis of the pen in order to measure the pressure on the ink cartridge (1), wherein the pen (20) is further configured to block the movement of the ink cartridge (1) in the first operation mode.

11. Active pen according to one of the previous claims, wherein the coupling with the touch device is capacitive.

## Patentansprüche

1. Aktiver Stift, der eine Tintenpatrone und eine Steuerschaltung umfasst,
worin die Tintenpatrone umfasst:
ein Tintenreservoir (3) zum Aufnehmen von Tinte,
eine Spitze mit einer Kugel (5), die drehbar gelagert ist, um Tinte vom Tintenreservoir zur Spitze während der Drehung der Kugel zu übertragen;
ein elektronisches Gerät (4) zum Erzeugen eines Tintenstrahls (12), wobei der besagte Tintenstrahl konfiguriert ist, um die Tinte aus dem besagten Tintenreservoir (3) auf die Oberfläche der Kugel (5) zu übertragen;
worin die Steuerschaltung (22) elektrisch mit dem elektronischen Gerät (4) verbunden ist und konfiguriert ist, um den aktiven Stift umzuschalten zwischen einem ersten Betriebsmodus, in welchem das elektronische Gerät (4) gesteuert wird, um Tinte vom Tintenreservoir (5) zur Oberfläche der Kugel (5) durch den Tintenstrahl (12) zu übertragen, und einem zweiten Betriebsmodus, in welchem das elektronische Gerät (4) gesteuert wird, um den Tintenstrahl (12) auszuschalten, um die Tintenübertragung vom Tintenreservoir (5) zur Oberfläche der Kugel (5) zu unterbrechen;
worin die Steuerschaltung (22) elektrisch mit der Spitze und/oder der Kugel (5) der Tintenpatrone (1) verbunden ist und konfiguriert ist, um im zweiten Modus ein elektrisches Signal an die Spitze und/oder an die Kugel (5) anzulegen, für eine kapazitive oder induktive oder elektromagnetische Kopplung mit einem Berührungsgerät zur Erfassung der Position der Spitze und/oder der Kugel (5) am Berührungsgerät.

2. Aktiver Stift gemäss dem vorhergehenden Anspruch, worin das elektronische Gerät (4) eine Halbleitervorrichtung ist.

3. Aktiver Stift gemäss einem der vorhergehenden Ansprüche, worin das elektronische Gerät (4) ein Gerät für mikroelektromechanische Systeme Gerät ist.

4. Aktiver Stift gemäss einem der vorhergehenden Ansprüche, worin das elektronische Gerät (4) ein piezoelektrisches Element oder ein Heizelement zum Erzeugen des Tintenstrahls (12) aufweist.

5. Aktiver Stift gemäss dem vorhergehenden Anspruch, worin das elektronische Gerät (4) eine Tintenkammer (9), die mit dem Tintenreservoir (3) verbunden ist, und eine Düse (10) aufweist, welche die Tintenkammer (9) mit der Kugel (5) verbindet, worin das piezoelektrische Element (6) das Volumen der Tintenkammer (9) verringert, um Tinte durch die Düse (10) zu drücken, um den Tintenstrahl (12) zu erzeugen.

6. Aktiver Stift gemäss einem der vorhergehenden Ansprüche, worin das elektronische Gerät (4) mit einem Abstand von mindestens 0,5 Millimetern von der Oberfläche der Kugel (5) angeordnet ist.

7. Aktiver Stift gemäss einem der vorhergehenden Ansprüche, worin die Tintenpatrone ein zweites Tintenreservoir zum Aufnehmen einer zweiten Tinte umfasst, worin das elektronische Gerät (4) oder ein zweites elektronisches Gerät konfiguriert ist, um einen zweiten Tintenstrahl zum Übertragen der zweiten Tinte vom zweiten Tintenreservoir zur Oberfläche der Kugel (5) zu erzeugen.

8. Aktiver Stift gemäss einem der Ansprüche 1 bis 6, der so konfiguriert ist, um Tinte nur in einer Farbe auf die Kugel (5) zu spritzen.

9. Aktiver Stift gemäss einem der vorhergehenden Ansprüche, umfassend einen Drucksensor (23), der konfiguriert ist, um im zweiten Betriebsmodus den auf die Tintenpatrone (1) ausgeübten Druck zu messen.

10. Aktivstift gemäss dem vorhergehenden Anspruch, worin die Tintenpatrone (1) derart im Stift (20) angebracht ist, dass sie entlang einer Längsachse des Stiftes beweglich ist, um den Druck auf die Tintenpatrone (1) zu messen, worin der Stift (20) zudem konfiguriert ist, um die Bewegung der Tintenpatrone (1) im ersten Betriebsmodus zu sperren.

11. Aktiver Stift gemäss einem der vorhergehenden Ansprüche, worin die Kopplung mit dem Berührungsgerät kapazitiv ist.

## Revendications

1. Stylo actif comprenant une cartouche d'encre et un circuit de commande, dans laquelle la cartouche d'encre comprend :
un réservoir d'encre (3) pour contenir de l'encre,
une pointe avec une bille (5) supportée en rotation pour transférer de l'encre du réservoir d'encre à la pointe pendant la rotation de la bille;
un dispositif électronique (4) pour créer un jet d'encre (12), ledit jet d'encre est configuré pour transférer l'encre du réservoir d'encre (3) sur la surface de la bille (5) ;
dans lequel le circuit de commande (22) est connecté électriquement au dispositif électronique (4) et configuré pour commuter le stylo actif entre un premier mode de fonctionnement dans lequel le dispositif électronique (4) est commandé pour transférer l'encre du réservoir d'encre (5) vers la surface de la bille (5) par le jet d'encre (12) et un second mode de fonctionnement dans lequel le dispositif électronique (4) est commandé pour arrêter le jet d'encre (12) pour interrompre le transfert d'encre du réservoir d'encre (5) vers la surface de la bille (5) ;
dans lequel le circuit de commande (22) est connecté électriquement à la pointe et/ou à la bille (5) de la cartouche d'encre (1) et est configuré pour appliquer dans le second mode un signal électrique à la pointe et/ou à la bille (5) pour un couplage capacitif ou inductif ou électromagnétique avec un dispositif tactile pour détecter la position de la pointe et/ou de la bille (5) sur le dispositif tactile.

2. Stylo actif selon la revendication précédente, dans lequel le dispositif électronique (4) est un dispositif semi-conducteur.

3. Stylo actif selon l'une des revendications précédentes, dans lequel le dispositif électronique (4) est un dispositif de systèmes micro-électromécaniques.

4. Stylo actif selon l'une des revendications précédentes, **caractérisé en ce que** le dispositif électronique (4) comprend un élément piézoélectrique ou un élément chauffant pour créer le jet d'encre (12).

5. Stylo actif selon la revendication précédente, dans lequel le dispositif électronique (4) comprend une chambre d'encre (9) reliée au réservoir d'encre (3) et une buse (10) reliant la chambre d'encre (9) à la bille (5), dans lequel l'élément piézoélectrique (6) réduit le volume de la chambre d'encre (9) pour pousser l'encre à travers la buse (10) afin de créer le jet d'encre (12).

6. Stylo actif selon l'une des revendications précédentes, le dispositif électronique (4) étant disposé à une distance d'au moins 0.5 millimètre de la surface de la bille (5).

7. Stylo actif selon l'une des revendications précédentes, dans lequel la cartouche d'encre comprend un second réservoir d'encre pour contenir une seconde encre, dans laquelle le dispositif électronique (4) ou un second dispositif électronique est configuré pour créer un second jet d'encre pour transférer la seconde encre du second réservoir d'encre sur la surface de la bille (5).

8. Stylo actif selon l'une des revendications 1 à 6, configuré pour jeter de l'encre d'une seule couleur sur la bille (5).

9. Stylo actif selon l'une des revendications précédentes, comprenant un capteur de pression (23) configuré pour mesurer dans le second mode de fonctionnement la pression appliquée sur la cartouche d'encre (1).

10. Stylo actif selon la revendication précédente, dans lequel la cartouche d'encre (1) est montée dans le stylo (20) de manière mobile le long d'un axe longitudinal du stylo afin de mesurer la pression sur la cartouche d'encre (1), dans lequel le stylo (20) est en outre configuré pour bloquer le mouvement de la cartouche d'encre (1) dans le premier mode de fonctionnement.

11. Stylo actif selon l'une des revendications précédentes, dans lequel l'accouplement avec le dispositif tactile est capacitif.
